(19) Europäisches Patentamt / European Patent Office / Office européen des brevets

(11) **EP 3 145 895 B1**

(12) **EUROPÄISCHE PATENTSCHRIFT**

(45) Veröffentlichungstag und Bekanntmachung des Hinweises auf die Patenterteilung:
**15.11.2023 Patentblatt 2023/46**

(21) Anmeldenummer: **15723499.8**

(22) Anmeldetag: **18.05.2015**

(51) Internationale Patentklassifikation (IPC):
**C04B 35/48** (2006.01)     **B29C 43/36** (2006.01)
**B30B 15/06** (2006.01)     **C04B 35/622** (2006.01)
**B32B 38/10** (2006.01)     **B32B 37/00** (2006.01)

(52) Gemeinsame Patentklassifikation (CPC):
**C04B 35/62218; B30B 15/062; C04B 35/48;**
B29C 33/56; B32B 37/0046; B32B 38/10

(86) Internationale Anmeldenummer:
**PCT/EP2015/060845**

(87) Internationale Veröffentlichungsnummer:
**WO 2015/177069 (26.11.2015 Gazette 2015/47)**

(54) **PRESSWERKZEUG UND VERWENDUNG EINER KERAMIKFOLIE ALS PRESSWERKZEUG SOWIE VERFAHREN ZUR HERSTELLUNG EINER KERAMIKFOLIE**

PRESSING TOOL, USE OF A CERAMIC FILM AS A PRESSING TOOL, AND METHOD FOR THE PRODUCTION OF A CERAMIC FILM

OUTIL DE PRESSE, UTILISATION D'UN FILM DE CÉRAMIQUE EN TANT QU'OUTIL DE PRESSE ET PROCÉDÉ DE FABRICATION D'UN FILM DE CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2014 DE 102014209661**

(43) Veröffentlichungstag der Anmeldung:
**29.03.2017 Patentblatt 2017/13**

(73) Patentinhaber: **Bundesdruckerei GmbH
10969 Berlin (DE)**

(72) Erfinder:
• **MÄRTENS, Detlef**
**13599 Berlin (DE)**
• **LEOPOLD, André**
**10119 Berlin (DE)**
• **GAHLBECK, Jeffry**
**15517 Fürstenwalde (DE)**
• **SIEBERT, Martin**
**10965 Berlin (DE)**
• **KLÜNDER, Kathrin**
**10999 Berlin (DE)**
• **BURGER, Wolfgang**
**73269 Hochdorf (DE)**
• **LEONHARDT, Wolfgang**
**73269 Hochdorf (DE)**

(74) Vertreter: **Patentanwälte Bressel und Partner mbB
Potsdamer Platz 10
10785 Berlin (DE)**

(56) Entgegenhaltungen:
WO-A1-2008/040813     WO-A1-2011/000390
DE-A1- 19 924 134     GB-A- 2 343 862
US-A- 5 089 455     US-A1- 2013 015 607

**Beschreibung**

Die hier beschriebene Erfindung betrifft ein Presswerkzeug, das durch eine freitragende Keramikfolie oder durch ein Pressblech, das einseitig oder beidseitig mit jeweils einer Keramikfolie beschichtet ist, gebildet ist, ferner eine Verwendung der Keramikfolie als Presswerkzeug in einem Laminierverfahren sowie ein Verfahren zur Herstellung einer Keramikfolie.

Zur Herstellung von Plastikkarten, beispielsweise in der Sicherheitsindustrie, werden aufeinandergestapelte Polymerfolien miteinander verpresst (laminiert), sodass ein einheitlicher (monolithischer) Kunststoffkörper entsteht, der nicht mehr in die einzelnen Folienlagen aufgetrennt werden kann. Für das Laminieren werden Laminieranlagen verwendet, in denen die Polymerfolienstapel unter erhöhter Temperatur und unter Anwendung von erhöhtem Druck miteinander verpresst werden. Laminieranlagen sind beispielsweise zur Herstellung von Laminaten für elektrische Mehrlagenschaltungen bekannt. Zu deren Herstellung werden typischerweise sogenannte Mehretagenpressen eingesetzt (DE 30 32 931 A1). Derartige Vorrichtungen werden auch für die Herstellung von laminierten Plastikkarten verwendet. In DE 198 31 377 A1 ist eine Mehretagenpresse zur Herstellung laminierter Plastikkarten, wie Scheckkarten, Kreditkarten und dergleichen, insbesondere von kontaktlosen Karten mit integrierten elektronischen Bauteilen, beschrieben. In der Mehretagenpresse liegen mehrere zu verpressende Folienstapel auf übereinander angeordneten vertikal zusammenfahrbaren Etagen der Presse. Jede Etage umfasst eine Heizung. Der Pressvorgang erfolgt durch Anheben der Etagen, bis sie unter Druck aneinander anliegen.

Es gibt Mehretagenpressen, bei denen eine Vielzahl von übereinander angeordneten Stapeln verpresst werden, wobei die Stapel durch Laminierbleche voneinander getrennt sind. Beispielsweise wird in DE 198 31 377 A1 angegeben, dass die Folienstapel jeweils durch Pressbleche voneinander separiert sind, damit sie beim Pressvorgang nicht zusammenkleben.

Außerdem werden auch Durchlaufanlagen eingesetzt, in denen die Polymerfolienstapel nacheinander durch die Anlage hindurchgeschleust und dabei verpresst werden (beispielsweise angegeben in EP 2 236 287 A2 und DE 10 2012 207 174 A1).

Im Allgemeinen werden den Pressen Mehrfachnutzen zugeführt, aus denen die einzelnen Plastikkarten nach dem Laminieren beispielsweise mit einem Stanzverfahren vereinzelt werden.

Die Laminierbleche haben unter anderem die Aufgabe, die Oberflächenbeschaffenheit der Plastikkarten vorzugeben. Beispielsweise kann gefordert sein, dass die Plastikkarten eine hochglänzende oder, alternativ, eine gleichmäßig matte Oberfläche aufweisen. Hierzu werden Laminierbleche eingesetzt, die die gewünschte Oberflächenbeschaffenheit aufweisen und diese beim Laminieren auf die Polymerlagenoberflächen übertragen. Ferner besteht gegebenenfalls auch die Notwendigkeit, ein Profil in der Oberfläche der Plastikkarten zu bilden. Hierzu können die Bleche das gewünschte Prägeprofil als Negativ aufweisen. Diese Bleche können auch nach dem Laminieren eingesetzt werden, um ein Prägeprofil nachträglich in die Oberfläche der Plastikkarten einzuprägen. Hierzu ist beispielsweise in DE 10 2008 008 044 A1 ein Verfahren zum Prägen von Oberflächenstrukturen in einem Substrat zur Herstellung eines kartenförmigen Datenträgers angegeben, bei dem Laminierbleche, die keine Prägestrukturen aufweisen, für die Herstellung eines aus mehreren Lagen bestehenden Laminats und weitere Bleche (Prägebleche) mit Prägestrukturen zum Prägen der Oberflächenstrukturen verwendet werden.

Aus DE 10 2008 058 912 A1 ist ein Laminationsblech angegeben, dass vermeiden soll, dass bei der Herstellung von schichtförmigen Dokumenten insbesondere durch Verunreinigungen beim Stapeln und/oder Transportieren Kratzer auf den Dokumenten entstehen. Um diese Aufgabe zu lösen, weist das Laminationsblech erste und zweite Bereiche auf, die ersten und zweiten Bereichen eines damit hergestellten schichtförmigen Bogens entsprechen, wobei die Dokumente aus den ersten Bereichen des Bogens hergestellt werden. Die zweiten Bereiche des Laminationsbleches weisen Vertiefungen gegenüber den ersten Bereichen auf, sodass die ersten Bereiche der Bögen gegenüber deren zweiten Bereichen vertieft sind und die Dokumentenbereiche bei der Handhabung der Bögen bevorzugt nicht beschädigt werden.

Ferner ist in DE 10 2010 031 421 B4 eine Laminiervorrichtung zum Laminieren eines mehrlagigen Dokuments angegeben. Diese Vorrichtung umfasst zwei Laminierplatten, zwischen denen das Dokument angeordnet wird und die aus mindestens einem elektrisch leitfähigen keramischen Material gebildet sind. Die Laminierplatten weisen elektrische Anschlüsse auf, sodass die Laminierplatte und das Dokument durch Anlegen einer elektrischen Spannung an die elektrischen Anschlüsse erwärmt werden können. Als Materialien für vollkeramische Laminierplatten werden Aluminiumnitrid, ein III-V-Verbindungshalbleiter, und Siliziumnitrid, ein Nichtleiter, verwendet. Derartige Platten haben, verglichen mit metallischen Laminierplatten, aufgrund ihrer relativ geringen Dichte eine sehr geringe Wärmekapazität. Durch die Leitfähigkeit der Keramik kann auf den Einbau einer Heizpatrone verzichtet werden. Dadurch sind sehr steile Temperaturanstiege möglich.

Es hat sich allerdings herausgestellt, dass es bei herkömmlichen Laminierblechen aus Metall beim Hantieren zu Beschädigungen auf polierten Blechoberflächen kommt, da leicht Kratzer oder Dellen erzeugt werden. Diese Beschädigungen führen beim Laminieren zu Ausschuss und müssen daher ausgetauscht werden. Ein weiteres Problem stellt nach dem Laminiervorgang die sehr hohe Haftung der Bleche zum Laminiergut dar, sodass ein Vereinzeln der Laminate sehr aufwändig ist. Die in DE 10 2010 031 421 B4 genannten vollkeramischen Platten sind ebenfalls äußerst empfindlich gegen Beschädigungen, da sie leicht brechen bzw. reißen.

Keramiken als resistente Materialen für Stempel von Pressen sind bekannt.

GB 2 343 862 A offenbart ein Teil zur Verwendung in einer Formvorrichtung, beispielsweise in einer Tablettenpresse, das ein geformtes Element umfasst, welches Zirkoniumdioxid enthält. Das Teil kann ein Stempel sein, ist verschleißfest und ermöglicht gut definierte geprägte oder beeindruckte Regionen reproduzierbar auf Formkörpern zu bilden.

US 2013015607 A1 offenbart ebenfalls ein Presswerkzeug mit einem Kontaktteil aus Keramikmaterial, beispielsweise Zirkoniumdioxid.

US 5 089 455 A offenbart dünne anorganische gesinterte Strukturen mit ausreichender Festigkeit und Flexibilität, um ein Biegen ohne Bruch in mindestens einer Richtung auf einen Krümmungsradius von weniger als 20 cm zu ermöglichen, Verfahren zu ihrer Herstellung und Produkte, die diese enthalten, werden beschrieben. Gesinterte Strukturen können Zirkonoxid, Titanoxid, Aluminiumoxid, Siliciumdioxid, Seltenerdmetalloxide, Alkalioxide, Erdalkalimetalloxide und Metalloxide der ersten, zweiten und dritten Übergangsreihe und Kombinationen davon umfassen. Es können auch Sintermetallstrukturen bereitgestellt werden.

Es liegt der vorliegenden Erfindung die Aufgabe zugrunde, ein Werkzeug zu finden, das beim Laminieren von Polymerfolien eingesetzt werden kann, das gegen mechanische Beanspruchung ausreichend widerstandsfähig ist und das überdies den Vorteil bietet, dass sich das laminierte Gut von dem Werkzeug leicht wieder ablösen lässt.

Gemäß einem ersten Aspekt der vorliegenden Erfindung werden diese Aufgaben durch ein Presswerkzeug nach Anspruch 1 gelöst, das durch eine freitragende Keramikfolie oder durch ein einseitig oderbeidseitig mit jeweils einer Keramikfolie beschichtetes Pressblech gebildet ist, wobei die Keramikfolie aus einem Zirkoniumdioxid ($ZrO_2$) enthaltenden Keramikmaterial gebildet ist, wobei

- das Zirkoniumdioxid mit Yttriumoxid und/oder Ceroxid tetragonal stabilisiert ist,
- das Keramikmaterial ein Aluminat von Lanthan enthält,
- das Keramikmaterial hexagonale Plättchen enthält.

Gemäß einem zweiten Aspekt der vorliegenden Erfindung werden diese Aufgaben auch durch die Verwendung einer Zirkoniumdioxid ($ZrO_2$) enthaltenden Keramikfolie als Presswerkzeug in einem Laminierverfahren gemäß Anspruch 5 gelöst.

Gemäß einem dritten Aspekt der vorliegenden Erfindung werden diese Aufgaben auch durch ein Verfahren zur Herstellung eines Presswerkzeugs nach Anspruch 6 gelöst.

Die freitragende Zirkoniumdioxid enthaltende Keramikfolie und ein mit einer oder mehreren derartigen Keramikfolien beschichtetes Pressblech stellen äußerst robuste Presswerkzeuge dar. Insbesondere stellt sich nämlich heraus, dass die mechanischen Eigenschaften von Zirkoniumdioxid enthaltenden keramischen Materialien sehr gut sind, da diese Materialien gegen Kratzer- und Dellenbildung sowie gegenüber Einreißen besonders widerstandsfähig sind. Beispielsweise ist die Härte derartiger Materialien sehr hoch. Der Elastizitätsmodul der Zirkoniumdioxid enthaltenden Matrixwerkstoffe bzw. der Zirkoniumdioxid enthaltenden Werkstoffe entspricht etwa der von Stahl. Vor diesem Hintergrund ist es besonders sinnvoll, eine Stahl-Keramik-Verbundlösung durch Verkleben der freitragenden Zirkoniumdioxid enthaltenden Keramikfolie mit einem Pressblech aus Metall (Metallblech), insbesondere Stahl, beispielsweise Edelstahl, herzustellen. Da auch die thermischen Eigenschaften dieser Materialien gemäß der vorliegenden Erfindung wie im Falle des in DE 10 2010 031 421 B4 angegebenen AlN/$Si_3N_4$-Materials für das Laminieren günstig sind, eignen sie sich wie diese für den Einsatz bei der Herstellung von Plastikkarten und anderen Laminaten. Demnach weisen die Keramikmaterialien gemäß der vorliegenden Erfindung unter anderem wegen ihrer geringen Dichte im Vergleich zu metallischen Materialien vorteilhafte thermische Eigenschaften, wie eine geringe Wärmekapazität, auf. Der Vorteil der erfindungsgemäßen Presswerkzeuge führt demnach zu einer erheblichen Erhöhung der Standzeit der Presswerkzeuge im Vergleich zu konventionellen Laminationsblechen gemäß dem Stand der Technik, zur Ausschussreduzierung der im Herstellprozess erzeugten Kunststofflaminate und zu einer Reduzierung der Prozesszeiten insgesamt, die für die Herstellung von Kunststofflaminaten benötigt werden. Außerdem ist die Handhabung beim Laminieren äußerst einfach, da sich die hergestellten Laminate nach dem Laminierprozess von den Keramikfolien sehr leicht ablösen lassen.

Das erfindungsgemäße Presswerkzeug wird entweder beim Laminieren von Polymerlagen zu einem Kunststoffkörper eingesetzt oder zum nachträglichen Erzeugen von Oberflächenstrukturen in dem Kunststoffkörper mit einem Prägeprozess.

Der laminierte bzw. geprägte Kunststoffkörper kann zur Herstellung eines Wert- oder Sicherheitsproduktes dienen. Unter einem Wert- oder Sicherheitsprodukt ist beispielsweise ein Reisepass, Personalausweis, Führerschein oder eine andere ID-Karte oder ein Zugangskontrollausweis, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton, Haftetikett (beispielsweise zur Produktsicherung) oder ein anderes ID-Dokument zu verstehen. Derartige Produkte sind Wert- oder Sicherheitsdokumente. Als Wert- oder Sicherheitsprodukt ist auch ein Sicherheitselement zu verstehen, das mit einem zu schützenden Gegenstand unlösbar verbunden werden kann, beispielsweise ein Aufkleber, Etikett oder dergleichen. Das Wert- oder Sicherheitsprodukt kann beispielsweise eine Smartcard sein. Das Wert- oder Sicherheitsdokument kann im ID 1-, ID 2-, ID 3- oder in irgendeinem anderen Format vorliegen, beispielsweise in Heftform, wie bei einem passähnlichen Gegenstand.

Der Kunststoffkörper kann auch ein Basismaterial für die Herstellung von elektrischen Leiterplatten oder ein Laminat in der Möbel- und Baustoffindustrie sein.

In einer ersten erfindungsgemäßen Ausführungsvariante der vorliegenden Erfindung ist das Presswerkzeug durch eine freitragende Keramikfolie gebildet. In diesem Falle weist das Presswerkzeug keine die Keramikfolie flächig versteifenden Konstruktionselemente auf. Die Keramikfolie könnte allenfalls durch einen äußeren Rahmen versteift sein und/oder einen Dichtungsrahmen zum Anlegen von Vakuum aufweisen. Jedenfalls weist die freitragende Keramikfolie in dieser Ausführungsform keinen flächigen Träger auf. Dadurch kann sich die Keramikfolie in optimaler Art und Weise an eventuelle Unebenheiten des zu bearbeitenden Kunststoffmaterials anschmiegen. Falls der Polymerlagenstapel beispielsweise eine innenliegende elektrische Schaltung, beispielsweise mit einem Halbleiterchip und einer Antennenleiterstruktur, aufweist, können sich an der Außenseite des Polymerfolienstapels entsprechende lokale Erhebungen ausbilden, die mit einem starren Laminationswerkzeug zu einer punktuellen Druckspitze beim Laminieren führen würden, sodass in diesen Bereichen leicht Beschädigungen der Schaltungskomponenten auftreten könnten. Indem sich die freitragende Keramikfolie an die Oberfläche des Stapels anschmiegt, wird die Gefahr von dadurch verursachten Beschädigungen verringert.

In einer zweiten erfindungsgemäßen Ausführungsvariante der vorliegenden Erfindung ist das Presswerkzeug durch ein einseitig oder beidseitig mit jeweils einer Keramikfolie beschichtetes Pressblech gebildet. In diesem Falle wird die Keramikfolie zusätzlich durch das Pressblech versteift.

Das Keramikmaterial der Keramikfolie enthält tetragonal stabilisiertes Zirkoniumdioxid (TZP), wobei das tetragonal stabilisierte Zirkoniumdioxid durch Yttriumoxid und/oder Ceroxid stabilisiert ist (mit Yttrium stabilisiert: Y-TZP; mit Cer stabilisiert: Ce-TZP). Dieses Material weist dadurch eine hohe mechanische Festigkeit (hohes E-Modul, hohe Bruchzähigkeit) auf.

In einer weiteren bevorzugten Ausführungsform der vorliegenden Erfindung ist das Keramikmaterial aus mindestens zwei Phasen gebildet, von denen das tetragonal stabilisierte Zirkoniumdioxid eine der beiden Phasen bildet.

Das Keramikmaterial enthält zusätzlich zu Zirkoniumdioxid hexagonale Plättchen, die eine zweite der beiden Phasen bilden können. Diese wirken als innere Verstärkung, sodass gewissermaßen ein Verbundwerkstoff gebildet wird. Das Aspektverhältnis der Plättchen (Verhältnis der Ausdehnung parallel zur Plättchenebene zur Ausdehnung senkrecht zur Plättchenebene) beträgt vorzugsweise mindestens 2. Die hexagonalen Plättchen können beispielsweise durch eine Aluminatphase gebildet sein. Der Anteil der hexagonalen Plättchen kann, bezogen auf das Keramikmaterial, im Bereich von 10 bis 75 Vol.-% betragen. Der Volumenanteil der hexagonalen Plättchen im Keramikmaterial kann insbesondere dadurch ermittelt werden, dass ein polierter Querschnitt durch das Keramikmaterial (Politurgefüge) erstellt und beispielsweise mit einem Rasterelektronenmikroskop (REM) untersucht wird, wobei die hexagonalen Plättchen in Form von kontrastierenden nadelförmigen Gebilden in dem übrigen Material erkennbar sind, und dass der Flächenanteil der hexagonalen Plättchen in diesem Politurgefüge, der den Volumenanteil angibt, ermittelt wird. Hierzu wird ein statistisches Mittel über mehrere Politurgefüge-Aufnahmen gebildet. Durch diese Plättchen weist das bereits sehr feste Material eine noch höhere Bruchzähigkeit und Biegebruchfestigkeit auf.

Derartige Materialien sind beispielhaft in EP 2 086 909 B1 beschrieben. Das Keramikmaterial enthält in einer besonders bevorzugten Ausführungsform gemäß der vorliegenden Erfindung 98 bis 50 Vol.-% Zirkoniumdioxid als Matrixmaterial sowie 2 bis 50 Vol.-% Aluminiumoxid, von dem wiederum 5 bis 90 Vol.-%, bezogen auf das Aluminiumoxid, in Form der hexagonalen Plättchen vorliegen. Das Zirkoniumdioxid ist vorzugsweise entweder mit 2 bis 3 Mol-% Yttriumoxid oder mit 10 bis 15 Mol-% Ceroxid oder mit einer Mischung aus Yttriumoxid und Ceroxid im Bereich von 0 bis 3 Mol-% Yttriumoxid und von 0 bis 15 Mol-% Ceroxid, jeweils bezogen auf die Menge an Zirkoniumdioxid, stabilisiert. Beispielsweise kann das Zirkoniumdioxid zur Herstellung des Keramikmaterials zunächst in Form von Partikeln mit einer mittleren Teilchengröße von $\leq 0{,}35\ \mu m$ (gemessen mittels eines Sedimentationsverfahrens oder mittels Lasergranolumetrie) eingesetzt und diese Partikel dann mit Yttriumoxid und/oder Ceroxid umhüllt werden (Coating-Verfahren), woraufhin die tetragonale Stabilisierung der Zirkoniumdioxid-Partikel durch Diffusionsreaktion in einem Sinterprozess vorgenommen wird. Alternativ kann die Stabilisierung auch durch Co-Präzipitation des Zirkoniummaterials mit dem Yttrium- und/oder Cer-Material erreicht werden. Als Ausgangsstoffe sowohl für das Coating-Verfahren als auch für das Co-Präzipitationsverfahren können übliche Verbindungen der Metalle eingesetzt werden, beispielsweise deren Oxy- oder Hydroxychloride.

Das Keramikmaterial enthält ein Aluminat mindestens eines Seltenerdmetalls, wobei zumindest ein Aluminat von Lanthan enthalten ist. Unter den Seltenerdmetallen sind die Elemente Scandium (Sc), Yttrium (Y), Lanthan (La) und die Lanthanoide, also Cer (Ce), Praseodym (Pr), Neodym (Nd), Promethium (Pm), Samarium (Sm), Europium (Eu), Gadolinium (Gd), Terbium (Tb), Dysprosium (Dy), Holmium (Ho), Erbium (Er), Thulium (Tu), Ytterbium (Yb) und Lutetium (Lu), zu verstehen. Als Aluminate sind grundsätzlich alle möglichen Stöchiometrien von Aluminaten der Seltenerdmetalle zu verstehen. Als Aluminat bevorzugt ist die Verbindung $ReAl_{11}O_{18}$, wobei Re Lanthan ist, sodass das Aluminat in Form von Lanthanoxid ($La_2O_3$) eingesetzt wird. Die Aluminate bilden vorzugsweise die hexagonalen Plättchen. Zusätzlich kann ein Teil des bei der Herstellung des Keramikmaterials verwendeten Aluminiumoxids nicht zu Plättchen umgesetzt sondern in Form von nicht umgesetztem kugelförmigem $Al_2O_3$ vorliegen.

Das Keramikmaterial kann ferner weitere Bestandteile enthalten, beispielsweise Bestandteile, die eine für ein Erosionsverfahren ausreichende elektrische Leitfähigkeit des Materials generieren. Beispielsweise kann das Keramikmaterial hierzu Titancarbid (TiC) enthalten. Falls diese zusätzlichen Bestandteile in dem Keramikmaterial enthalten sind, verringert sich der Gehalt der übrigen Bestandteile (beispielsweise $ZrO_2$, Seltenerdmetalloxid, $Al_2O_3$) proportional, sodass deren Anteile untereinander in denselben Proportionen wie oben angegeben bleiben. Titancarbid kann beispielsweise in einer Menge von 22 Vol.-% bis 40 Vol.-%, bezogen auf das Keramikmaterial, enthalten sein.

Derart mit hexagonalen Plättchen, beispielsweise aus $ReAl_{11}O_{18}$, versehenes tetragonal stabilisiertes $ZrO_2$ weist äußerst vorteilhafte mechanische Eigenschaften auf: Der Elastizitätsmodul E dieses Materials beträgt vorzugsweise höchstens 250 GPa (gemessen gemäß DIN EN 843, Teil 2 in der am Prioritätstag dieser Anmeldung geltenden Versionsfassung). Der Elastizitätsmodul E beträgt vorzugsweise mindestens 160 GPa. Die Vickers-Härte $HV_{0,5}$ beträgt vorzugsweise höchstens 1500 (gemessen gemäß DIN 50113 in der am Prioritätstag dieser Anmeldung geltenden Versionsfassung). Die Vickers-Härte $HV_{0,5}$ beträgt vorzugsweise mindestens 800. Das Material ist vor allem flexibel und weist daher eine besonders hohe Biegebruchfestigkeit $\sigma_{38}$ von vorzugsweise mindestens 800 MPa (gemessen gemäß DIN EN ISO 6872 in der am Prioritätstag dieser Anmeldung geltenden Versionsfassung) und eine besonders hohe Bruchzähigkeit $K_{lc}$ von vorzugsweise mindestens 6 MPa·m$^{-1/2}$ (gemessen gemäß DIN CEN/TS 14425-5 in der am Prioritätstag dieser Anmeldung geltenden Versionsfassung) auf. Die Biegebruchfestigkeit $\sigma_{38}$ beträgt vorzugsweise höchstens 2500 MPa, und die Bruchzähigkeit $K_{lc}$ beträgt höchstens 30 MPa·m$^{-1/2}$.

In einer weiteren bevorzugten Ausführungsform der vorliegenden Erfindung beträgt die Dicke der Keramikfolie von 10 $\mu$m bis 5 mm, weiter bevorzugt von 50 $\mu$m bis 2 mm, noch weiter bevorzugt von 75 $\mu$m bis 1,0 mm und am meisten bevorzugt von 100 $\mu$m bis 600 $\mu$m. Die Keramikfolie kann beliebige (Flächen-)Abmessungen aufweisen. Im Falle eines rechteckigen Halbzeuges kann die Keramikfolie beispielsweise Seitenlängen im Bereich von 5 cm bis 100 cm haben. Grundsätzlich sind auch Formatgrößen mit größeren oder kleineren Seitenlängen möglich.

Zur Herstellung des Keramikmaterials kann wie folgt vorgegangen werden: i) die Mischung der eingesetzten Feststoffe (tetragonal stabilisiertes Zirkoniumdioxid sowie weitere Materialien) wird gemahlen, ii) mindestens ein Dispergiermittel und mindestens ein Bindemittel werden zugesetzt, iii) grobe Partikel werden abgetrennt, iv) die Dispersion wird getrocknet, v) das getrocknete Material wird gesintert und vi) gegebenenfalls heißisostatisch nachverdichtet.

Als Dispergiermittel kommen auf dem einschlägigen Fachgebiet übliche Lösungsmittel, insbesondere organische Lösungsmittel, beispielsweise Toluol, zum Einsatz. Als Bindemittel kommen auf dem einschlägigen Fachgebiet übliche Bindemittel, insbesondere organische Bindemittel, beispielsweise Polyvinylalkohol, Polyvinylacetat, Polyvinylacrylat, Cellulose und dergleichen, zum Einsatz.

Zur Herstellung einer Zirkoniumdioxid enthaltenden Keramikfolie, wobei das Zirkoniumdioxid tetragonal stabilisiert ist, wird ein Verfahren mit den folgenden Verfahrensschritten angewendet:

a. Bereitstellen einer Dispersion von von Zirkoniumdioxid, das mit Yttriumoxid und/oder Ceroxid tetragonal stabilisiert ist, enthaltenden Keramikpartikeln, $Al_2O_3$ und $La_2O_3$, in mindestens einem Dispergiermittel und ferner vorzugsweise mindestens einem Bindemittel (siehe vorstehende Verfahrensschritte i, ii, iii);
b. Aufbringen der Dispersion auf eine Unterlage, beispielsweise auf eine Polyethylenterephthalat-Folie;
c. Entfernen des mindestens einen Dispergiermittels aus der Dispersion, wobei eine getrocknete Schicht der Keramikpartikel und gegebenenfalls des mindestens einen Bindemittels auf der Unterlage gebildet wird (siehe vorstehender Verfahrensschritt iv);
d. Abziehen der getrockneten Schicht der Keramikpartikel von der Unterlage; und
e. Sintern der getrockneten Schicht der Keramikpartikel, wobei eine Keramikfolie gebildet wird (siehe vorstehender Verfahrensschritt v).

Falls die Keramikfolie nachverdichtet werden soll, wird sie in Schritt e. vorzugsweise mit einem heißisostatischen Pressverfahren gepresst (siehe vorstehender Verfahrensschritt vi).

Zum Aufbringen der Dispersion auf die Unterlage kann ein Press- oder ein Foliengießverfahren angewendet werden. Zur Herstellung der Keramikfolie kann grundsätzlich auch ein Extrusionsverfahren eingesetzt werden. Für ein Foliengießverfahren wird die Dispersion beispielsweise auf eine Polyethylenterephthalat-Folie aufgegossen und mit einem Dosierrakel (Doctor Blade) abgezogen.

5

Falls die Keramikfolie durch ein Pressblech versteift ist, kann entweder eine Keramikfolie auf eine Seite des Pressbleches aufgebracht werden, oder es kann jeweils eine Keramikfolie auf beide Seiten des Pressbleches aufgebracht werden, indem das vorstehend angegebene Verfahren zur Herstellung der Keramikfolie(n) angewendet wird.

In einer weiteren bevorzugten Ausführungsform der vorliegenden Erfindung ist die mindestens eine Keramikfolie mittels jeweils eines Klebers, beispielsweise eines Transferklebebandes, mit dem Pressblech verbunden. Alternativ kann auch jeder beliebige andere Kleber eingesetzt werden, beispielsweise ein UV- oder warm härtbarer Kleber. Das derart hergestellte Werkzeug kann in einem Laminier- oder Prägeverfahren eingesetzt werden.

In einer weiteren bevorzugten Ausführungsform der vorliegenden Erfindung ist die freitragende Keramikfolie oder das mit der mindestens einen Keramikfolie beschichtete Pressblech entweder in Form eines rechteckigen Flachzeuges oder in Form eines in sich geschlossenen Bandes ausgebildet. Für Laminieranlagen in der Mehretagentechnik oder bei einem Prägeverfahren, bei dem das zu prägende Gut einzeln dem Prägeprozess unterworfen wird, wird rechteckiges Flachzeug eingesetzt. Zwischen jeweils zwei derartigen Flachzeugen wird das zu bearbeitende Gut eingespannt. Falls eine Durchlaufanlage zum Laminieren oder Prägen eingesetzt wird, wird vorzugsweise ein in sich geschlossenes Band verwendet, beispielsweise in einer kommerziellen Durchlauf-Laminieranlage.

In einer weiteren bevorzugten Ausführungsform der vorliegenden Erfindung ist das rechteckige Flachzeug in einem Randbereich oder in zwei einander gegenüberliegenden Randbereichen (auf derselben Flachzeugseite oder auf unterschiedlichen Seiten) zumindest jeweils einseitig oder beidseitig verdickt. Ein derartiges Flachzeug bzw. Laminierwerkzeug wird beispielsweise zum Herstellen eines Kunststoffkörpers, der in ein Identitätsdokument eingenäht werden soll und zu diesem Zweck eine seitlich vorstehende gedünnte Einnählasche aufweist, verwendet. Der Bereich der Verdickung in dem mindestens einen Randbereich korrespondiert zu dem dünneren Bereich der Einnählasche, und der benachbarte dünnere Bereich des Laminierwerkzeuges korrespondiert zu dem dickeren Bereich des Kunststoffkörpers, der der Datenseite des Dokuments entspricht. Der Kunststoffkörper kann in diesem dünneren Bereich nach der Herstellung mittig in zwei Teile getrennt werden, die zwei einzunähende Seiten (Blätter) für das Identitätsdokument ergeben. Innerhalb des dickeren Bereiches jeder damit entstehenden Dokumentenseite kann eine elektronische Schaltung, beispielsweise eine RFID-Schaltung, bestehend aus einem RFID-Halbleiterchip und einem mit diesem verbundenen Antennenleiterzug, eingebettet sein.

Wenn das erfindungsgemäße Presswerkzeug auch zur Ausbildung von Oberflächenstrukturen auf der Ober- und/oder Unterseite eines Kunststoffkörpers geeignet sein soll, sind auf dem Presswerkzeug diesen Oberflächenstrukturen entsprechende dreidimensionale Strukturen als Negativ auszubilden. Deren Erzeugung kann beispielsweise in Verfahrensschritt d. des erfindungsgemäßen Verfahrens mittels eines entsprechenden Presswerkzeuges durch Abformen realisiert werden. Wesentlich präziser als das Einbringen dieser Strukturen in die getrocknete Schicht der Keramikpartikel mittels eines Abformverfahrens kann auch die gesinterte Keramikfolie bearbeitet werden, um die Strukturen zu erzeugen. Hierzu kann ein Erosionsverfahren, insbesondere ein Funkenerosionsverfahren, eingesetzt werden. Damit letzteres anwendbar ist, muss die Keramikfolie elektrisch leitfähig sein. Hierzu enthält die Folie elektrisch leitfähige Partikel, beispielsweise SiC- oder TiC-Teilchen. Diese werden der Schicht aus Keramikpartikeln bereits bei der Herstellung der Schicht zugegeben. Zum Funkenerodieren wird vorzugsweise ein aus einem elektrisch gut leitenden Material, beispielsweise Kupfer, hergestellter Stempel als Matrize verwendet, der den auf der Keramikpartikelschicht zu bildenden Strukturen entsprechende dreidimensionale Strukturen im Form des Negativs aufweist. Der Stempel dient beim Funkenerodieren als Gegenelektrode zu der Keramikfolie.

Das erfindungsgemäße Presswerkzeug kann in einem Laminierverfahren eingesetzt werden. Hierzu wird ein Stapel von mehreren Polymerfolien gebildet, die anschließend unter Anwendung von Wärme und Druckeinwirkung miteinander verschmolzen werden. Typischerweise erweicht das Material der Polymerfolien beim Laminiervorgang und fließt, sodass eine stoffschlüssige Verbindung der Folien untereinander erreicht wird. Die Höhe des Laminierdruckes und insbesondere der Laminiertemperatur sind von der Materialart der einzelnen Polymerfolien, deren Dicken sowie von anderen Parametern abhängig. Die Maximaltemperatur, auf die die Laminierpresswerkzeuge erwärmt werden, wird abhängig von der Art des Materials, aus dem die Polymerfolien bestehen, gewählt. Im Falle von Polycarbonat (PC) und PC-Blends (Mischungen von PC mit anderen Polymeren) kann die Maximaltemperatur in der Laminierpresse im Bereich von 170-200 °C, vorzugsweise 180-190 °C, liegen. Während des Laminiervorganges werden die Polymerfolienstapel zwischen den Laminierpresswerkzeugen vorzugsweise einem Druck senkrecht zu den Oberflächen des Stapels unterworfen. Dieser Druck soll möglichst so groß sein, dass Luft, die sich eventuell zwischen den Polymerfolien befindet, beim Erweichen der Lagen herausgepresst wird. Um das Entweichen von Luft noch zu fördern, kann im Bereich des Polymerfolienstapels zusätzlich Vakuum angelegt werden. Der Pressdruck kann in einem Bereich von 25 bis 700 N/cm$^2$, vorzugsweise in einem Bereich von 50 bis 100 N/cm$^2$, liegen.

Ein durch Lamination herzustellender Kunststoffkörper wird aus mehreren Polymerfolien erzeugt. Diese Folien sind aus einem Polymer gebildet, das vorzugsweise ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus 3 bis 12, vorzugsweise 4 bis 10 Folien, hergestellt wobei die einzelnen Folien aus dem gleichen Material oder aus unterschiedlichen Materialien bestehen können. Derart gebildete Overlaylagen schützen ein darunter angeordnetes Sicherheitsmerkmal und/oder verleihen dem Dokument die erforderliche Abriebfestigkeit.

Für die Herstellung von Wert- oder Sicherheitsprodukten werden die Polymerfolienstapel für das Laminierverfahren aus Polymerfolien gebildet, die mehreren Wert- oder Sicherheitsprodukten entsprechen, sodass beim Laminieren ein Mehrfachnutzen erzeugt wird. Die Wert- oder Sicherheitsprodukte werden aus den laminierten Kunststoffkörpern dann durch Vereinzeln, beispielsweise Ausstanzen, hergestellt.

Der herzustellende Kunststoffkörper für ein Wert- oder Sicherheitsprodukt kann eine eingebettete elektronische Schaltung aufweisen, beispielsweise eine RFID (radio frequency identification device)-Schaltung, bestehend aus einem RFID-Halbleiterchip und einem mit diesem verbundenen Antennenleiterzug. Der RFID-Halbleiterchip kann insbesondere ungehäust auf dem Antennenleiterzug montiert sein, vorzugsweise in Flip-Chip-Technik, ganz bevorzugt mittels eines anisotropen Leitklebers. Der Halbleiterchip ist bevorzugt gedünnt. Hierzu kann die elektronische Schaltung auf einer Trägerlage montiert sein. Oberhalb der Trägerlage in dem zu laminierenden Polymerfolienstapel kann sich eine Ausgleichsfolienlage befinden, die an den Stellen Aussparungen aufweist, an denen sich elektronische Bauelemente wie ein Halbleiterchip befinden, sodass diese in die Aussparungen hineinragen. Oberhalb der Ausgleichsfolienlage in dem Polymerfolienstapel kann sich ferner eine Fließfolienlage befinden, deren Glasübergangstemperatur niedriger ist als die der Ausgleichsfolien- und der Trägerlage.

Das erfindungsgemäße Presswerkzeug kann auch zur Herstellung von Oberflächenstrukturen in einem Prägeverfahren dienen. Beispielsweise können auf diese Weise CLI (changeable laser image)-Strukturen erzeugt werden. Derartige Strukturen sind beispielsweise durch matrixförmig angeordnete Mikrolinsen gekennzeichnet. Hierzu kann das Presswerkzeug die vorstehend erwähnten Oberflächenstrukturen in einem Negativ aufweisen. Das Prägeverfahren kann während eines Laminierverfahrens stattfinden oder unabhängig davon in einem separaten Verfahrensschritt, beispielsweise nach einem Laminierverfahren. Auch beim Prägeverfahren wird der zu prägende Kunststoffkörper zusammen mit dem Presswerkzeug einem erhöhten Druck und einer erhöhten Temperatur ausgesetzt.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:

Fig. 1:  schematische Darstellungen eines erfindungsgemäßen Presswerkzeuges in einer zweiten Ausführungsvariante in einer ersten Ausführungsform in Form eines Laminierbleches mit darauf aufgebrachter Keramikfolie; A) Draufsicht; B) Querschnittsansicht; und C) in einer ersten Variante in Form einer freitragenden Keramikfolie, Querschnittsansicht;

Fig. 2:  schematische Darstellungen eines erfindungsgemäßen Presswerkzeuges in einer zweiten Ausführungsform in der ersten Ausführungsvariante in Form einer freitragenden Keramikfolie; A) Draufsicht; B) Querschnittsansicht;

Fig. 3:  schematische Darstellungen eines erfindungsgemäßen Presswerkzeuges in einer dritten Ausführungsform; A) Draufsicht; B) Querschnittsansicht; C) damit zu verpressender Polymerfolienstapel;

Fig. 4   Schematische Darstellung der Schritte des erfindungsgemäßen Verfahrens zur Herstellung der Keramikfolie; A) Herstellen einer TZP-Dispersion; B) Aufgießen der Dispersion auf eine Unterlage; C) Trocknen der gebildeten Schicht; D) Abziehen der getrockneten Schicht von der Unterlage; E) Sintern der abgezogenen Schicht;

Fig. 5   Rasterelektronenmikroskopische (REM) Aufnahme einer gesinterten TZP-Keramik mit einer $ReAl_{11}O_{18}$-Plättchen-Phase in einer ersten erfindungsgemäßen Ausführungsform (Beispiel 1);

Fig. 6   Rasterelektronenmikroskopische (REM) Aufnahme einer gesinterten TZP-Keramik mit einer $ReAl_{11}O_{18}$-Plättchen-Phase in einer zweiten erfindungsgemäßen Ausführungsform (Beispiel 2);

Fig. 7   Rasterelektronenmikroskopische (REM) Aufnahme einer gesinterten TZP-Keramik mit einer $ReAl_{11}O_{18}$-Plättchen-Phase in einer dritten erfindungsgemäßen Ausführungsform (Beispiel 3);

Fig. 8   Rasterelektronenmikroskopische (REM) Aufnahme einer gesinterten TZP-Keramik ohne Plättchen-Phase in einer vierten erfindungsgemäßen Ausführungsform (Beispiel 4).

In den Figuren bezeichnen gleiche Bezugszeichen Elemente mit derselben Funktion oder dieselben Elemente.

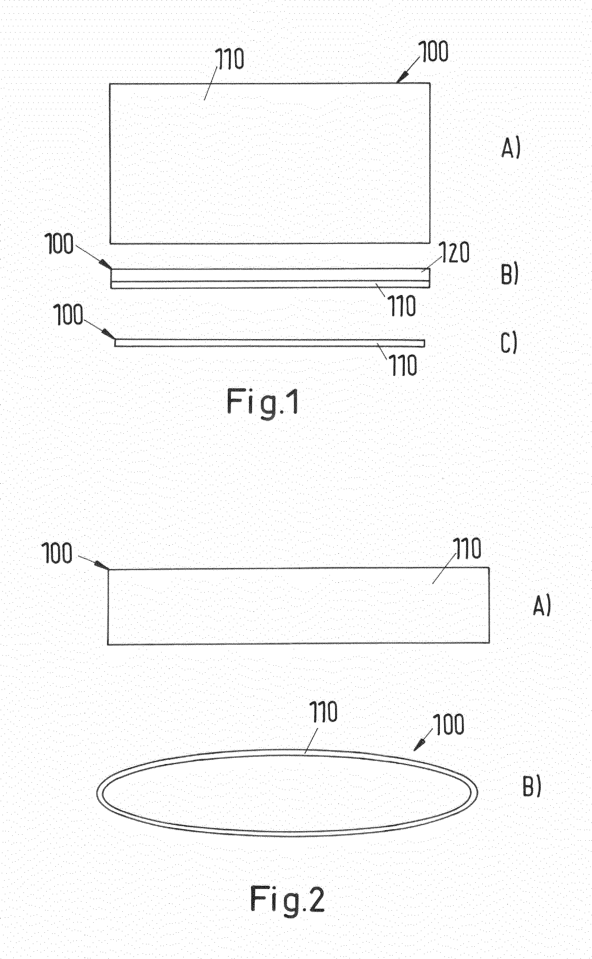

Fig. 1A, 1B zeigen ein erfindungsgemäßes Presswerkzeug 100 in Form eines rechteckigen Flachzeuges. In dieser Ausführungsform ist das Presswerkzeug in einer zweiten Ausführungsvariante durch ein herkömmliches Laminierblech (Pressblech) 120 aus Edelstahl und eine auf dieses Laminierblech mittels eines Transferklebebandes (nicht dargestellt) geklebte Keramikfolie 110 gebildet. Die Dickenverhältnisse des Stahl-Laminierbleches und der Keramikfolie entsprechen nicht den tatsächlichen Verhältnissen: Das Laminierblech kann beispielsweise eine Dicke von 0,5 mm haben. Die Keramikfolie weist beispielsweise eine Dicke von 0,3 mm auf. Fig. 1A zeigt eine Draufsicht auf das Laminierblech, wobei die Keramikfolie an der Oberseite liegt. Fig. 1B zeigt einen Querschnitt durch das Presswerkzeug, wobei der sich zwischen dem Laminierblech und der Keramikfolie befindende Kleber nicht dargestellt ist. In einer weiteren (ersten) Ausführungsvariante ist das Presswerkzeug durch eine freitragende Keramikfolie 110 gebildet (Fig. 1C: Querschnittsansicht).

Fig. 2 zeigt ein erfindungsgemäßes Presswerkzeug 100 in Form eines in sich geschlossenen Bandes. In dieser Ausführungsform ist das Presswerkzeug durch ein in sich geschlossenes Band einer Keramikfolie 110 gebildet. Fig. 2A zeigt eine Draufsicht auf das bandförmige Presswerkzeug. Fig. 2B zeigt einen Querschnitt durch das bandförmige Presswerkzeug. Die freitragende Keramikfolie weist beispielsweise eine Dicke von 0,3 mm (bis 0,5 mm) auf.

Alternativ kann auch dieses Presswerkzeug in Form eines Sandwich gebildet sein, das aus einer Keramikfolie besteht, die auf ein in sich geschlossenes Band eines aus Stahl gefertigten Laminierbandes aufgeklebt ist (nicht gezeigt). Das Laminierband kann in diesem Falle beispielsweise eine Dicke von 0,5 mm haben. Die Keramikfolie weist beispielsweise eine Dicke von 0,3 mm auf.

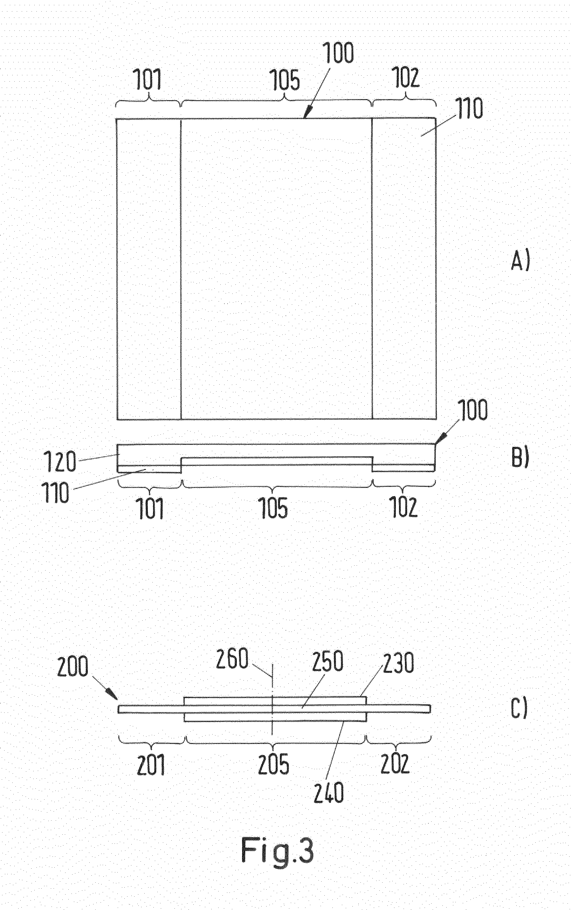

Fig. 3 zeigt ein erfindungsgemäßes Presswerkzeug 100 in Form eines rechteckigen Flachzeuges. In dieser Ausführungsform ist das Presswerkzeug durch ein Laminierblech (Pressblech) 120 aus Edelstahl und auf dieses Laminierblech mittels eines Transferklebebandes (nicht dargestellt) geklebten Keramikfolien 110 gebildet. Die Dickenverhältnisse des Stahl-Laminierbleches und der Keramikfolien entsprechen nicht den tatsächlichen Verhältnissen: Das Laminierblech kann beispielsweise eine Dicke von 0,5 mm haben. Die Keramikfolien weisen beispielsweise eine Dicke von 0,3 mm auf. Fig. 3A zeigt eine Draufsicht auf das Laminierblech, wobei die Keramikfolie an der Oberseite liegt. Fig. 3B zeigt einen Querschnitt durch das Presswerkzeug, wobei der sich zwischen dem Laminierblech und der Keramikfolie befindende Kleber nicht dargestellt ist.

Das Laminierblech 120 weist randseitige Bereiche 101, 102 auf, die dicker sind als der mittige Bereich 105. Jeweils eine Keramikfolie 110 ist auf die randseitigen Bereiche 101, 102 und den mittigen Bereich 105 einseitig aufgebracht. Die erhöhte Dicke in den randseitigen Bereichen kann beispielsweise durch Metallauftrag mittels Schweißen erzielt werden. Die randseitige Dickenerhöhung gegenüber der Dicke des mittigen Bereiches beträgt beispielsweise 0,1 mm. Indem beim Laminieren derartige Presswerkzeuge 100 verwendet werden, können aus Polymerfolien unterschiedlicher Größe Laminate (Kunststoffkörper) hergestellt werden, die in der Mitte dicker sind, weil dort mehrere Polymerfolien miteinander verschweißt sind, während in den Randbereichen nur eine oder wenige Polymerfolien vorliegen. Ein dadurch erzeugtes Laminat (Kunststoffkörper) 200 ist in Fig. 3C gezeigt, wenn beidseitig die in Fig. 3A, 3B gezeigten Presswerkzeuge verwendet werden. In dem gezeigten Beispiel ist eine mittige Polymerfolie 250, die eine Personalisierungsseite bilden kann, durch zwei kleinere äußere Polymerfolien 230, 240 flankiert, wobei letztere die mittige Polymerfolie in den Randbereichen 201, 202 freilassen, während die Folien im Mittenbereich 205 einen Stapel bilden. Das fertige Laminat wird schließlich entlang der Linie 260 geschnitten, sodass zwei Teile entstehen, die zum Einnähen in ein Passdokument geeignet sind.

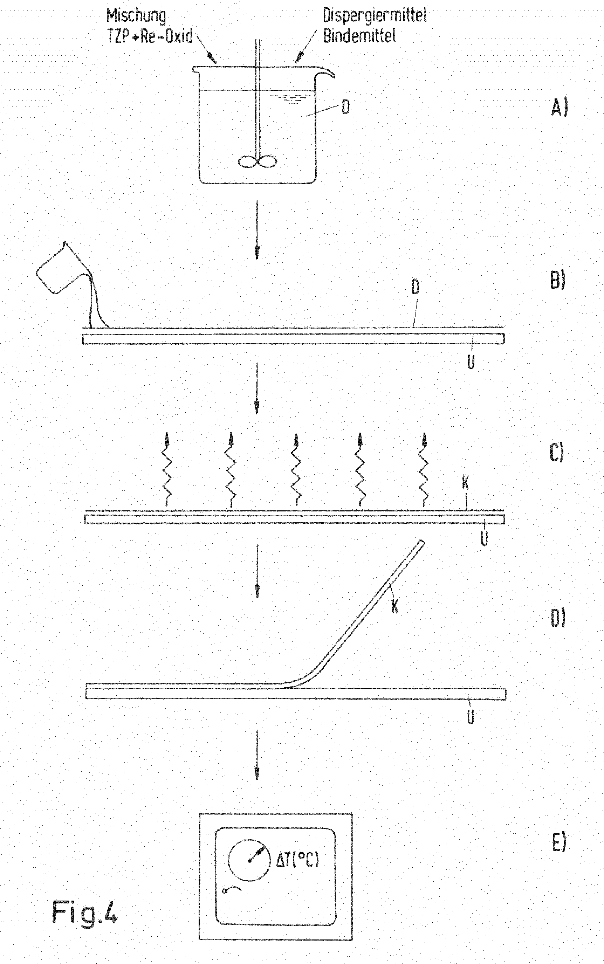

Zur Herstellung der Keramikfolie werden die Ausgangsmaterialien (beispielsweise TZP, $Al_2O_3$, $La_2O_3$) zusammen mit einem Dispergiermittel, beispielsweise Toluol, und einem Bindemittel, beispielsweise Polyvinylacetat, unter Bildung einer Dispersion D gemischt (Fig. 4A: Verfahrensschritt a). Anschließend wird diese Dispersion auf eine Unterlage U, beispielsweise eine Mylar-Folie (Marke von DuPont), ausgegossen und mit einem Dosierrakel (nicht dargestellt) abgezogen (Fig. 4B: Verfahrensschritt b). Danach wird die gebildete Schicht getrocknet, wobei das Dispergiermittel verdampft. Es bleibt eine verdichtete Schicht (K) der anorganischen Partikel in dem Bindemittel zurück (Fig. 4C: Verfahrensschritt c). Die getrocknete Schicht wird dann von der Unterlage abgezogen (Fig. 4D: Verfahrensschritt d). Schließlich wird die abgezogene Schicht in einem Ofen gesintert, wobei eine Keramikfolie erhalten wird (Fig. 4E: Verfahrensschritt e).

Beispiele 1 bis 4:

Die in Tabelle 1 angegebenen Zusammensetzungen, wobei $ZrO_2$, gegebenenfalls $Y_2O_3$ und gegebenenfalls $CeO_2$ mittels eines Coating-Verfahrens zu einem tetragonal stabilisierten Zirkoniumdioxid umgesetzt und das stabilisierte Zirkoniumdioxid mit $Al_2O_3$ und gegebenenfalls $La_2O_3$ vermischt wurde, wurden jeweils in Wasser dispergiert, die Dispersionen desagglomeriert und in einem Mahlschritt homogenisiert. Nach dem Abtrennen von den Mahlkugeln wurde die Mischung zusammen mit Polyvinylacetat in Toluol dispergiert. Die Dispersion wurde anschließend auf eine Mylar-Folie (DuPont) ausgegossen und mittels eines Dosierrakels abgezogen. Die erhaltene Schicht wurde getrocknet, nach dem Trocknen von der Unterlage abgezogen, und die abgezogene Schicht wurde in einem Ofen (ohne Anwendung von Druck) gesintert. Die Sinterbedingungen für diese Keramikmaterialien waren wie folgt:

Keramikmaterial gemäß Beispiel 1: 1480 bis 1500 °C, 3 bis 5 Stunden;
Keramikmaterial gemäß Beispiel 2: 1350 bis 1480 °C, 3 bis 5 Stunden;
Keramikmaterial gemäß Beispiel 3: 1420 bis 1500 °C, 3 bis 5 Stunden;
Keramikmaterial gemäß Beispiel 4: 1350 bis 1480 °C, 3 bis 5 Stunden.

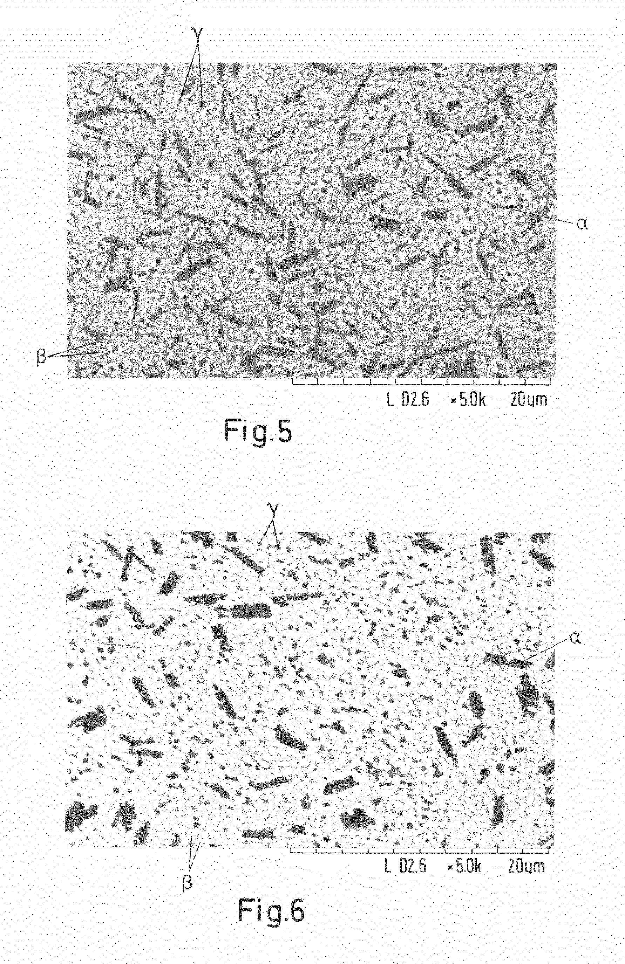

Die Dicke der gesinterten Proben (Keramikfolien) betrug etwa 0,5 mm. Von den erhaltenen Keramikfolien wurden rasterelektronische (REM) Aufnahmen erstellt. Diese sind in Fig. 5 bis 8 gezeigt. Es handelt sich um tetragonal stabilisiertes $ZrO_2$ (TZP) mit bzw. ohne eingelagerte Plättchen-Phase.

Bei der Untersuchung der mechanischen Eigenschaften der gesinterten Keramikmaterialien wurden die in Tabelle 2 angegebenen Ergebnisse gefunden.

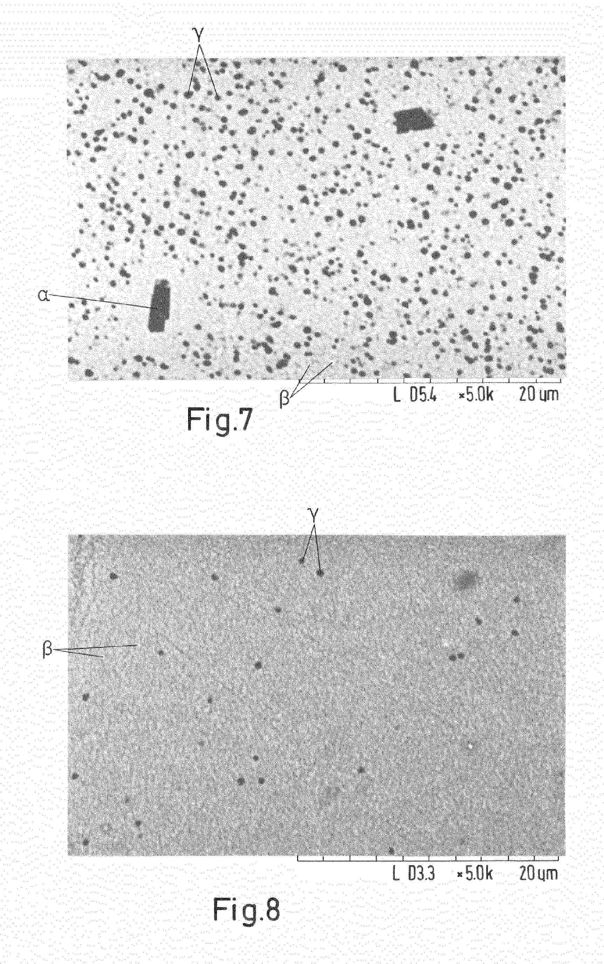

In den REM-Aufnahmen sind eine plättchenförmige Phase $\alpha$ in Form von langgestreckten dunklen Flächenbereichen, die tetragonal stabilisierte $ZrO_2$-(TZP) Phase $\beta$ in Form von hellen annähernd kreisförmigen Flächenbereichen und nicht umgesetzte globulare $Al_2O_3$-Partikel $\gamma$ in Form von kleinen schwarzen Flecken erkennbar. Allerdings enthält das Material von Beispiel 4 / Fig. 8 keine plättchenförmige Phase, da kein $ReAl_{11}O_{18}$ gebildet worden ist.

Tabelle 1 (Angaben in Gew.-%):

|  | Beisp. 1 / Fig. 5 | Beisp. 2 / Fig. 6 | Beisp. 3 / Fig. 7 | Beisp. 4 / Fig. 8 |
|---|---|---|---|---|
| $ZrO_2$ | 75,6 | 85,7 | 84,5 | 95,0 |
| $Y_2O_3$ | 0 | 4,3 | 1,9 | 4,8 |
| $CeO_2$ | 14,4 | 0 | 8,6 | 0 |
| $Al_2O_3$ | 7,5 | 8,3 | 4,5 | 0,2 |
| $La_2O_3$ | 2,5 | 1,7 | 0,5 | 0 |

Tabelle 2 - mechanische Eigenschaften:

|  | Beisp. 1 / Fig. 5 | Beisp. 2 / Fig. 6 | Beisp. 3 / Fig. 7 | Beisp. 4 / Fig. 8 |
|---|---|---|---|---|
| Dichte $\varrho_E$ [g/cm³] | 5,957 | 5,75 | 5,96 | 5,98 |
| E-Modul [GPa] | 210 | 220 | 210 | 220 |
| Biegebruchfestigkeit $\sigma_{3B}$ [MPa] | 950 | 1250 | 1150 | 1350 |
| Vickershärte $HV_{0,5}$ | 1200 | 1420 | 1350 | 1400 |
| Vickershärte $HV_{10}$ | 1100 | 1250 | 1200 | 1250 |
| Bruchzähigkeit $K_{Ic}$ [MPa√m] | 10,8 | 7,5 | 8,5 | 8,2 |

Bezugszeichenliste:

| | |
|---|---|
| 100 | Presswerkzeug |
| 101, 102 | randseitiger Bereich |
| 105 | mittiger Bereich |
| 110 | Keramikfolie |
| 120 | Pressblech, Laminierblech |
| 200 | Kunststoffkörper, Laminat |
| 201,202 | Randbereich |
| 205 | Mittenbereich |
| 230, 240 | (äußere) Polymerfolien |
| 250 | (mittige) Polymerfolie |
| 260 | Schneidelinie |
| D | Dispersion |
| K | ungesinterte Keramikschicht |

| U | Unterlage |
| α | plättchenförmige Phase |
| β | TZP-Phase |
| γ | $Al_2O_3$ |

## Patentansprüche

**1.** Presswerkzeug (100), gebildet durch eine freitragende Keramikfolie (110) oder durch ein einseitig oder beidseitig mit jeweils einer Keramikfolie (110) beschichtetes Pressblech (120), wobei die Keramikfolie (110) aus einem Zirkoniumdioxid enthaltenden Keramikmaterial gebildet ist, **dadurch gekennzeichnet, dass**

- das Zirkoniumdioxid mit Yttriumoxid und/oder Ceroxid tetragonal stabilisiert ist,
- das Keramikmaterial ein Aluminat von Lanthan enthält,
- das Keramikmaterial hexagonale Plättchen enthält.

**2.** Presswerkzeug (100) nach Anspruch 1, **dadurch gekennzeichnet, dass** die mindestens eine Keramikfolie (110) mittels jeweils eines Klebers mit dem Pressblech (120) verbunden ist.

**3.** Presswerkzeug (100) nach einem der vorstehenden Ansprüche, **dadurch gekennzeichnet, dass** die freitragende Keramikfolie (110) oder das mit der mindestens einen Keramikfolie (110) beschichtete Pressblech (120) in Form eines rechteckigen Flachzeuges oder eines in sich geschlossenen Bandes ausgebildet ist.

**4.** Presswerkzeug (100) nach Anspruch 3, **dadurch gekennzeichnet, dass** das rechteckige Flachzeug in zwei einander gegenüberliegenden Randbereichen (101, 102) zumindest einseitig jeweils verdickt ist.

**5.** Verwendung einer Keramikfolie (110), die aus einem Zirkoniumdioxid enthaltenden Keramikmaterial gebildet ist, als Presswerkzeug (100) in einem Laminierverfahren, wobei

- das Zirkoniumdioxid mit Yttriumoxid und/oder Ceroxid tetragonal stabilisiert ist,
- das Keramikmaterial ein Aluminat von Lanthan enthält,
- das Keramikmaterial hexagonale Plättchen enthält.

**6.** Verfahren zur Herstellung eines Presswerkzeugs (100) nach einem der Ansprüche 1-4, aufweisend eine Zirkoniumdioxid enthaltende Keramikfolie (110), bestehend aus den folgenden Verfahrensschritten:

a. Bereitstellen einer Dispersion (D) von Zirkoniumdioxid, das mit Yttriumoxid und/oder Ceroxid tetragonal stabilisiert ist, enthaltenden Keramikpartikeln, $Al_2O_3$ und $La_2O_3$, in mindestens einem Dispergiermittel;
b. Aufbringen der Dispersion (D) auf eine Unterlage (U);
c. Entfernen des mindestens einen Dispergiermittels aus der Dispersion (D), wobei eine getrocknete Schicht der Keramikpartikel auf der Unterlage (U) gebildet wird;
d. Abziehen der getrockneten Schicht (K) der Keramikpartikel von der Unterlage (U); und
e. Sintern der getrockneten Schicht (K) der Keramikpartikel, wobei eine Keramikfolie (110) gebildet wird;
f. Aufbringen der Keramikfolie (110) auf eine Seite eines Pressbleches (120).

## Claims

**1.** Press tool (100) formed by a cantilevered ceramic sheet (110) or by a press plate (120) coated on one side or both sides with a ceramic sheet (110) respectively, wherein the ceramic sheet (110) is formed of a ceramic material containing zirconium dioxide, **characterized in that**

- the zirconium dioxide is tetragonally stabilized with yttrium oxide and/or cerium oxide,
- the ceramic material contains an aluminate of lanthanum,
- the ceramic material contains hexagonal platelets.

**2.** Press tool (100) according to claim 1, **characterized in that** the at least one ceramic sheet (110) is bonded to the press plate (120) by means of an adhesive.

**3.** Press tool (100) according to one of the preceding claims, **characterized in that** the cantilevered ceramic sheet (110) or the press plate (120) coated with the at least one ceramic sheet (110) is designed in the form of a rectangular flat product or a self-contained strip.

**4.** Press tool (100) according to claim 3, **characterized in that** the rectangular flat product is thickened in two mutually opposite edge regions (101, 102) at least on one side in each case.

**5.** Use of a ceramic sheet (110) formed of a ceramic material containing zirconium dioxide as a press tool (100) in a laminating process, wherein

- the zirconium dioxide is tetragonally stabilized with yttrium oxide and/or cerium oxide,
- the ceramic material contains an aluminate of lanthanum
- the ceramic material contains hexagonal platelets.

**6.** A method of making a press tool (100) according to any one of claims 1-4, comprising a zirconium dioxide-containing ceramic sheet (110), consisting of the following method steps:

a. Providing a dispersion (D) of zirconium dioxide containing ceramic particles, wherein the zirconium dioxide is tetragonally stabilized with yttrium oxide and/or cerium oxide, and $Al_2O_3$ and $La_2O_3$, in at least one dispersant;
b. Applying the dispersion (D) to a support (U);
c. Removing the at least one dispersant from the dispersion (D), thereby forming a dried layer of the ceramic particles on the support (U);
d. Peeling off the dried layer (K) of the ceramic particles from the support (U); and
e. Sintering the dried layer (K) of ceramic particles, thereby forming a ceramic sheet (110);
f. Applying the ceramic sheet (110) to one side of a press plate (120).

**Revendications**

**1.** Outil de pressage (100), formé par une feuille céramique (110) autoportante ou par une tôle de pressage (120) revêtue d'un côté ou des deux côtés respectivement d'une feuille céramique (110), la feuille céramique (110) étant formée d'un matériau céramique contenant du dioxyde de zirconium,
**caractérisé en ce que**

- le dioxyde de zirconium est stabilisé de manière tétragonale avec de l'oxyde d'yttrium et/ou de l'oxyde de cérium,
- le matériau céramique contient un aluminate de lanthane,
- le matériau céramique contient des plaquettes hexagonales.

**2.** Outil de pressage (100) selon la revendication 1, **caractérisé en ce que** la au moins une feuille céramique (110) est reliée à la tôle de pressage (120) au moyen d'un adhésif respectif.

**3.** Outil de pressage (100) selon l'une des revendications précédentes, **caractérisé en ce que** la feuille céramique autoportante (110) ou la tôle de pressage (120) revêtue de la au moins une feuille céramique (110) est réalisée sous la forme d'un produit plat rectangulaire ou d'une bande fermée sur elle-même.

**4.** Outil de pressage (100) selon la revendication 3, **caractérisé en ce que** le produit plat rectangulaire est épaissi respectivement au moins d'un côté dans deux zones de bord (101, 102) opposées l'une à l'autre.

**5.** Utilisation d'une feuille de céramique (110), qui est formée d'un matériau céramique contenant du dioxyde de zirconium, comme outil de pressage (100) dans un procédé de laminage,
dans lequel

- le dioxyde de zirconium est stabilisée de manière tétragonale avec de l'oxyde d'yttrium et/ou de l'oxyde de cérium,
- le matériau céramique contient un aluminate de lanthane,

- le matériau céramique contient des plaquettes hexagonales.

6. Procédé de fabrication d'un outil de pressage (100) selon l'une quelconque des revendications 1-4, comprenant une feuille de céramique (110) contenant de la dioxyde de zirconium, comprenant les étapes de procédé suivantes :

a. Préparation d'une dispersion (D) de particules de céramique contenant de la dioxyde de zirconium stabilisée de manière tétragonale par de l'oxyde d'yttrium et/ou de l'oxyde de cérium, $Al_2O_3$ et $La_2O_3$, dans au moins un agent dispersant;
b. Application de la dispersion (D) sur un support (U);
c. Elimination de l'au moins un agent dispersant de la dispersion (D), une couche séchée des particules céramiques étant formée sur le support (U) ;
d. Décollement de la couche séchée (K) des particules céramiques du support (U) ; et
e. Frittage de la couche séchée (K) des particules céramiques, ce qui permet de former une feuille céramique (110);
f. Application de la feuille céramique (110) sur un côté d'une tôle de pressage (120).

Fig.1

Fig.2

Fig.3

Mischung
TZP + Re-Oxid

Dispergiermittel
Bindemittel

D

A)

D

U

B)

K

U

C)

K

U

D)

ΔT(°C)

E)

Fig.4

Fig.5

Fig.6

Fig.7

Fig.8

**EP 3 145 895 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3032931 A1
- DE 19831377 A1
- EP 2236287 A2
- DE 102012207174 A1
- DE 102008008044 A1
- DE 102008058912 A1
- DE 102010031421 B4
- GB 2343862 A
- US 2013015607 A1
- US 5089455 A
- EP 2086909 B1